(19) Europäisches Patentamt / European Patent Office / Office européen des brevets

(11) **EP 3 907 948 A1**

(12) **EUROPEAN PATENT APPLICATION**

(43) Date of publication:
**10.11.2021 Bulletin 2021/45**

(51) Int Cl.:
**H04L 25/02** (2006.01)    **H04B 17/336** (2015.01)
**H04L 25/03** (2006.01)

(21) Application number: **20173513.1**

(22) Date of filing: **07.05.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Institut für Rundfunktechnik GmbH
80939 München (DE)**

(72) Inventor: **Shah, Sohail
81541 München (DE)**

(74) Representative: **Koplin, Moritz
Anne-Conway-Straße 1
28359 Bremen (DE)**

(54) **CHANNEL ESTIMATION AND EQUALIZATION IN OFDM SYSTEMS**

(57)    The present disclosure relates to channel estimation and/or channel equalization in OFDM systems with known pilot sequences and further applications in frequency offset estimation and signal-to-interference-plus-noise ratio (SINR) estimations. A method for estimating a signal-to-interference-plus-noise ratio (SINR) at a receiver of a wireless communication system OFDM signals may include: determining an estimate $\hat{s}_{serving}$ of the signal power of a serving cell of the communication system based on the channel impulse response estimated for the serving cell, determining an estimate $\hat{s}_{interfering}$ of the signal power of one or more interfering cells of the communication system based on the channel impulse response estimated for the one or more interfering cells, and determining an estimate $\widehat{SINR}$ of the SINR based on the determined estimate of the signal power of the serving cell and the determined estimate of the signal power of the one or more interfering cells. A Method for equalization of received symbols at a receiver of a wireless communication system using OFDM signals may include: determining an equalizer filter and applying the equalizer filter onto the received signal for equalization of the signal, wherein the equalizer filter is determined in the time domain based on an estimated channel impulse response, an estimated noise covariance and an estimated received symbol covariance.

**Fig. 7**

```
┌─────────────────────────────────────────────┐
│ Determine signal power of the serving cell    │──── S701
└─────────────────────────────────────────────┘
                      │
                      ▼
┌─────────────────────────────────────────────┐
│ Determine signal power of the interfering cell(s) │──── S702
└─────────────────────────────────────────────┘
                      │
                      ▼
┌─────────────────────────────────────────────┐
│ Determine SINR                                 │──── S703
└─────────────────────────────────────────────┘
```

**Description**

The present disclosure relates to channel estimation and/or channel equalization in OFDM systems with known pilot sequences and further applications in frequency offset estimation and signal-to-interference-plus-noise ratio (SINR) estimations.

**Background**

In telecommunications, orthogonal frequency-division multiplexing (OFDM) is a type of digital transmission, and a method of encoding digital data on multiple carrier frequencies. OFDM has developed into a popular scheme for wideband digital communication, used in applications such as digital television and audio broadcasting, DSL internet access, wireless networks, power line networks, and 4G or 5G mobile communications.

OFDM is a frequency-division multiplexing (FDM) scheme used as a digital multi-carrier modulation method. In OFDM, multiple closely spaced orthogonal subcarrier signals with overlapping spectra are transmitted to carry data in parallel. Demodulation is based on Fast Fourier Transform algorithms.

The main advantage of OFDM over single-carrier schemes is its ability to cope with severe channel conditions (for example, attenuation of high frequencies in a long copper wire, narrowband interference and frequency-selective fading due to multipath) without complex equalization filters.

Channel equalization is simplified because OFDM may be viewed as using many slowly modulated narrowband signals rather than one rapidly modulated wideband signal. The low symbol rate makes the use of a guard interval between symbols affordable, making it possible to eliminate intersymbol interference (ISI) and use echoes and time-spreading (in analog television visible as ghosting and blurring, respectively) to achieve a diversity gain, i.e. a signal-to-noise ratio improvement. This mechanism also facilitates the design of single frequency networks (SFNs) where several adjacent transmitters send the same signal simultaneously at the same frequency, as the signals from multiple distant transmitters may be re-combined constructively, sparing interference of a traditional single-carrier system.

In coded orthogonal frequency-division multiplexing (COFDM), forward error correction (convolutional coding) and time/frequency interleaving are applied to the signal being transmitted. This is done to overcome errors in mobile communication channels affected by multipath propagation and Doppler effects.

The following disclosure applies in general to channel estimation and/or channel equalization in OFDM systems with known pilot sequences and further applications in frequency offset estimation and signal-to-interference-plus-noise ratio (SINR) estimations.

It is an object of the present disclosure to provide more efficient and/or more robust algorithms and methods for channel estimation and/or channel equalization in OFDM systems with known pilot sequences and further applications in frequency offset estimation and signal-to-interference-plus-noise ratio (SINR) estimations.

**Summary**

In view of the above object, there are proposed methods according to exemplary aspects herein, in particular according to the independent claims. Such methods may be executed at the receiver in an OFDM wireless communication system. Dependent claims and further described exemplary aspects below relate to preferred exemplary embodiments.

According to an exemplary aspect, there may be provided a method for estimating a signal-to-interference-plus-noise ratio (SINR) at a receiver of a wireless communication system using OFDM signals.

The method for estimating a signal-to-interference-plus-noise ratio (SINR) at a receiver of a wireless communication system using OFDM signals may include: determining an estimate $\hat{s}_{serving}$ of the signal power of a serving cell of the communication system based on the channel impulse response estimated for the serving cell, determining an estimate $\hat{s}_{interfering}$ of the signal power of one or more interfering cells of the communication system based on the channel impulse response estimated for the one or more interfering cells, and/or determining an estimate $\widehat{SINR}$ of the SINR based on the determined estimate of the signal power of the serving cell and the determined estimate of the signal power of the one or more interfering cells.

According to preferred exemplary aspects, the estimate $\widehat{SINR}$ of the SINR may be determined further based on an estimate $\widehat{\sigma_n^2}$ of the noise variance in the time domain.

According to preferred exemplary aspects, the estimate $\widehat{SINR}$ of the SINR may be determined based on the equation:

$$\widehat{SINR}(n) = \frac{\hat{s}_{serving}(n)}{\hat{s}_{interfering}(n) + \widehat{\sigma_n^2}}$$

wherein $n$ denotes a slotnumber or subcarrier number of the signal, and $\sigma_n^2$ is the noise variance.

According to preferred exemplary aspects, the estimate of the signal power of the serving cell of the communication system may be determined based on the serving cell's channel impulse response in the time domain.

According to preferred exemplary aspects, the signal power of the serving cell may be estimated as

$$\hat{s}_{serving}(n) = \sum_{k=0}^{L-1} \left\| \hat{h}_{serving}(n,k) \right\|^2$$

where n preferably denotes a slotnumber or subcarrier number (or sample number) of the signal, and where $\hat{h}_{serving}(n, k)$ denotes the respective estimated channel impulse response coefficients in the time domain determined for the serving cell.

According to preferred exemplary aspects, the estimate of the signal power of the one or more interfering cells of the communication system may be determined based on the interfering cells' channel impulse response in the time domain.

According to preferred exemplary aspects, the signal power of the one or more interfering cells may be respectively estimated as

$$\hat{s}_{interfering}(n) = \sum_{k=0}^{L-1} \left\| \hat{h}_{interfering}(n,k) \right\|^2$$

where n preferably denotes a slotnumber or subcarrier number of the signal (or sample number), and where $\hat{h}_{interfering}(n, k)$ denotes the respective estimated channel impulse response coefficients in the time domain determined for the respective interfering cell.

According to preferred exemplary aspects, the channel impulse response for the serving cell and/or for the one or more interfering cells may respectively estimated based on respective cell-specific pilot sequences in reference signals of the serving cell and/or the one or more interfering cells.

According to another exemplary aspect, which may be combined with any of the above aspects, there may be provided a method for equalization of received symbols at a receiver of a wireless communication system using OFDM signals.

The method for equalization of received symbols at a receiver of a wireless communication system using OFDM signals may include determining an equalizer filter, and applying the equalizer filter onto the received signal for equalization of the signal. Exemplarily, the equalizer filter may preferably be determined in the time domain, further preferably based on an estimated channel impulse response, an estimated noise covariance and/or an estimated received symbol covariance.

According to preferred exemplary aspects, the noise covariance may be estimated by assuming that the noise is an identically distributed ideal Gaussian noise.

According to preferred exemplary aspects, the estimated received symbol covariance may be estimated based on an estimate of a probability distribution of the OFDM symbols in the time domain.

According to preferred exemplary aspects, the probability distribution of the OFDM symbols in the time domain may be estimated based on assuming a uniform distribution of the OFDM symbols in the frequency domain and performing an inverse Fourier transform on the uniformly distributed frequency domain OFDM symbols.

According to preferred exemplary aspects, the probability distribution of the OFDM symbols in the time domain may be estimated based on assuming a Gaussian distribution of the OFDM symbols in the time domain.

According to preferred exemplary aspects, a variance and/or mean of the Gaussian distribution of the OFDM symbols in the time domain may be estimated based on the inverse Fourier transform of the uniformly distributed frequency domain OFDM symbols.

According to preferred exemplary aspects, the equalizer filter may be an LMMSE equalizer filter, in particular preferably a Wiener filter.

According to preferred exemplary aspects, the equalizer filter may be determined based on the equation:

$$w = R_{xx}H(HR_{xx}H^{H} + R_{nn})^{-1}$$

where $H$ denotes a channel matrix based on a channel impulse response estimate, where $R_{nn}$ denotes a noise covariance matrix estimated based on noise or noise assumptions, and $R_{xx}$ denotes a symbol covariance matrix estimated based on an estimated symbol distribution in the time domain.

According to another exemplary aspect, there may be provided a receiver adapted to receive signals in a wireless communication system using OFDM signals, the receiver including a processor (such as a CPU) or processing unit (such as an FPGA) configured to execute the method of any of the above exemplary aspects.

According to another exemplary aspect, there may be provided a computer program product including computer-readable instructions that, when executed on a processor or processing unit of a computer or an OFDM receiver, cause the computer or OFDM receiver to execute the method of any of the above exemplary aspects.

While certain exemplary aspects have been described above, it is to be understood that such aspects are merely illustrative of and are not restrictive on the broad invention, and that the exemplary aspects are not limited to the specific constructions and arrangements shown and described above, since various other changes, combinations, omissions, modifications and substitutions, in addition to those set forth in the above paragraphs, are possible.

Those skilled in the art will appreciate that various adaptations, modifications, and/or combination of the just described aspects can be configured. Therefore, it is to be understood that, further aspects may be practiced other than as specifically described herein. For example, unless expressly stated otherwise, the steps of processes described herein may be performed in orders different from those described herein and one or more steps may be combined, split, or performed simultaneously.

Those skilled in the art will also appreciate, in view of this disclosure, that different aspects described herein may be combined to form other aspects of the present disclosure.

**Brief Description of the Drawings**

**Fig. 1** is an exemplary diagram of a Fast Fourier Transform (FFT) of the product of the reference signal (pilot signal) and received signal.

**Fig. 2** is an exemplary diagram shows the normalized mean square error MSE of the channel estimate as a function of the signal to noise ratio when using the exemplary methods of the present disclosure.

**Fig. 3** is an exemplary flow chart of an exemplary method of channel impulse response estimation in accordance with exemplary embodiments.

**Fig. 4** is an exemplary flow chart of an exemplary method of frequency offset estimation (integer frequency offset estimation) in accordance with exemplary embodiments.

**Fig. 5** is an exemplary flow chart of an exemplary method of frequency offset estimation (fractional frequency offset estimation) in accordance with exemplary embodiments.

**Fig. 6** is an exemplary flow chart of an exemplary method of signal power estimation in accordance with exemplary embodiments.

**Fig. 7** is an exemplary flow chart of an exemplary method of SINR estimation in accordance with exemplary embodiments.

**Fig. 8** is an exemplary flow chart of an exemplary method of equalization in accordance with exemplary embodiments.

**Detailed Description of Drawings and Exemplary Embodiments**

In the following, preferred aspects and exemplary embodiments of the present invention will be described in more detail with reference to the accompanying figures. Same or similar features in different drawings and embodiments are referred to by similar reference numerals. It is to be understood that the detailed description below relating to various preferred aspects and preferred embodiments are not to be meant as limiting the scope of the present invention.

The following exemplary embodiments relate in general to channel estimation and/or channel equalization in OFDM systems with known pilot sequences and further applications in frequency offset estimation and signal-to-interference-plus-noise ratio (SINR) estimations.

The herein described methods may in general be performed at receivers or receiving devices in wireless communication systems using OFDM signals. For example, the methods may be executed at a receiver device such as at a UE receiving an OFDM signal in a wireless communication system.

Such receivers may typically include a signal receiver such as one or typically multiple antennas, and a signal processing unit which may include data storage and/or memories for programs and storing parameters and/or signal data and a signal processing unit, typically including one or more CPUs or other processors and/or other processing logic such as integrated circuits and/or FPGAs or the like.

The methods may typically be applied in any type of OFDM-system, preferably those using known pilot signals (reference signals). This may include any type of receiving system or device in wireless communication systems such as e.g. DSL, WLAN, DVB, 4G, 5G, etc.

OFDM (Orthogonal Frequency-Division Multiplexing) systems may be configured to use pilot signals which are, for example, placed in a comb-like pattern or block-type patterns in the frequency domain.

An OFDM signal in the time domain may be generated by performing Inverse Fast Fourier Transform (IFFT) on the data and pilot sequences of the frequency domain.

The respective signals in the time and frequency domains are respectively given by the summation of data signals and pilot signals, e.g. as follows:
In the frequency domain, the signal *X(k)* may be regarded as being given as:

$$X(k) = X_{data}(k) + X_{pilot}(k) \qquad \text{with } k = 0, 1, \dots, N-1,$$

wherein *k* is the subcarrier number in the frequency domain and *N* is the total number of subcarriers.

However, the subcarriers may be divided into the two sets of the data subcarriers and the pilot subcarriers, respectively, as follows:

$$X_{data}(k) = \begin{cases} X_{data}(k_{data}) & \forall k \in K_{data} \\ 0 & \forall k \notin K_{data} \end{cases} \qquad \text{with} \quad k_{data} = 0, 1, \dots, N_{data}-1,$$

and

$$X_{pilot}(k) = \begin{cases} X_{pilot}(k_{pilot}) & \forall k \in K_{pilot} \\ 0 & \forall k \notin K_{pilot} \end{cases} \qquad \text{with} \quad k_{pilot} = 0, 1, \dots, N_{pilot}-1.$$

Herein, the total number of data subcarriers is denoted by $N_{data}$ and the total number of pilot subcarriers is denoted by $N_{pilot}$, with $N_{data} + N_{pilot} = N$.

In the time domain, the signal *x(n)* is given as:

$$x(n) = x_{data}(n) + x_{pilot}(n) \qquad \text{with } n = 0, 1, \dots, N-1,$$

wherein n is the sample number in the time domain.

As mentioned, the respective signal *x(n)* in the time domain may be obtained by performing Inverse Fast Fourier Transform (IFFT) on the data and pilot sequences of the frequency domain:

$$x(n) = IFFT\{X(k)\} = \sum_{k=0}^{N-1} X(k) \cdot \exp(i2\pi kn/N)$$

$$x_{data}(n) = IFFT\{X_{data}(k)\} = \sum_{k=0}^{N-1} X_{data}(k) \cdot \exp(i2\pi kn/N)$$

$$x_{pilot}(n) = IFFT\{X_{pilot}(k)\} = \sum_{k=0}^{N-1} X_{pilot}(k) \cdot \exp(i2\pi kn/N)$$

Accordingly, in terms of computation algorithm, performing an Inverse Fast Fourier Transform (IFFT) may be regarded as multiplication with complex exponentials and subsequent summation.

In some OFDM methods, such as those used in LTE/5G systems, the pilot signals in the frequency domain may be based on sequences of pseudo-random numbers (referred to as PN-sequences).

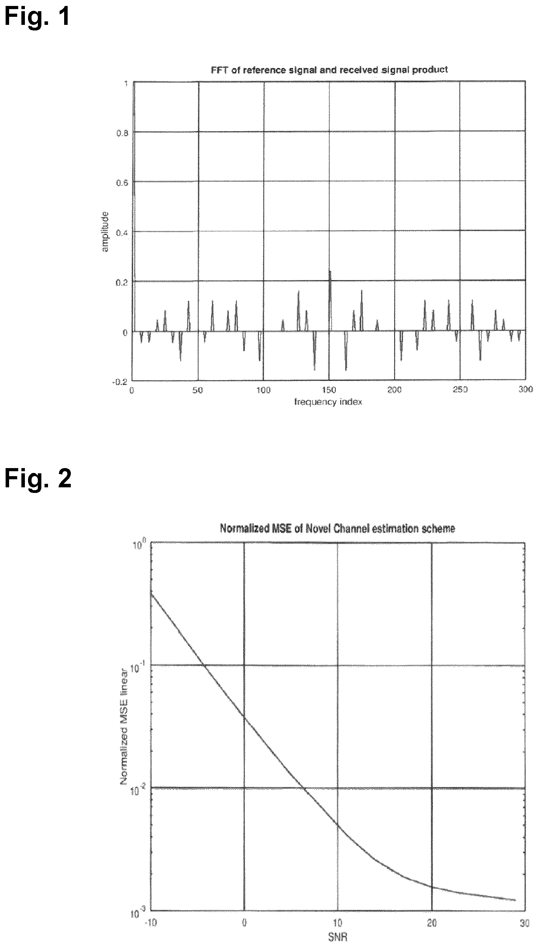

These may then have the property that the computation of their autocorrelation will result in a peak when there is no offset, and with an offset the autocorrelation result is much lower (as exemplarily shown in Fig. 1).

The autocorrelation may be obtained as follows:

$$R_{pilot}(k) = \sum_{k'=0}^{N-1} X_{pilot}(k') \cdot X_{pilot}(mod(k - k', N)) = \begin{cases} N_{pilot} - 1 & for\ k = 0 \\ -1 \vee t(m) \vee -t(m) - 2 & for\ k \neq 0 \end{cases}$$

**Fig. 1** is an exemplary diagram of a Fast Fourier Transform (FFT) of the product of the reference signal (pilot signal) and received signal.

As can be seen in Fig. 1, the amplitude is at its peak at the frequency index $k = 0$ and much lower for other frequency indexes $k > 0$.

The circular autocorrelation in the frequency domain can be regarded equivalent to the computation of multiplication with a conjugate in the time domain, so that this property makes the following operation in the time domain equivalent to a circular autocorrelation (such as above) in the frequency domain:

$$z(n, m) = y(n + m) \cdot conj\left(x_{pilot}(m)\right) \quad with\ m = 0, 1, ...., N - 1,$$

wherein $y(n)$ is the received signal (e.g. obtained from a circular buffer / circular receiving buffer at the receiver side) in the time domain.

As a result, it may be expected to observe the autocorrelation peak at the 0th subcarrier with $k = 0$.

This may be regarded as being equivalent to taking the sum of all the real and imaginary parts.

Hence, the sum of the product of the received signal and the conjugate of the reference signal (pilot signal) $z(n,m)$ in the time domain is indicative of an estimate of the respective channel tap value in the impulse response.

Herein, the term channel taps refer to the impulse response coefficients in the impulse response.

Accordingly, in some exemplary embodiments, the impulse response coefficients $h(n)$ can be estimated based on the sum $z(n)$ of the product of the received signal and the conjugate of the reference signal (pilot signal) $z(n,m)$ in the time domain:

$$z(n) = \sum_{m=0}^{N-1} z(n, m)$$

It is to be noted that the estimated channel tap value may be shifted by the frequency offset in case of a frequency offset. This may be used in some exemplary embodiments for estimating the frequency offset, as exemplarily described further below.

Preferably, instead of taking the sum of energy of the correlation, it may be further evaluated whether the respective channel tap has significant energy (or otherwise may preferably be neglected) by comparing the energy in the Fourier transform (FFT) of the energy against a threshold, such as e.g. given by a selected metric, such as e.g. a metric like the noise variance $\sigma^2_n$.

In view of the above, in some exemplary embodiments, the estimated channel tap in the impulse response may be set to zero if its contribution is to be considered below a certain threshold. This aspect may be provided by comparing the contribution of the respective channel tap to a selected metric, such as e.g. a metric like the noise variance $\sigma^2{}_n$.

Further exemplarily, the contribution from the respective channel tap for sample n may be estimated based on the Fourier transform of the product of the received signal and the conjugate of the reference signal (pilot signal) *z(n,m)* for *n,* and the estimated channel tap in the impulse response for n may be set to zero if its contribution is to be considered below a certain threshold, such as a metric such as e.g. the noise variance $\sigma^2{}_n$.

That is, the impulse response coefficients *h(n)* in the time domain may be estimated as follows:

$$\hat{h}(n) = \begin{cases} \sum\limits_{m=0}^{N-1} z(n,m) & when \quad \sum \|FT\{[z(n,0),z(n,1),\dots,z(n,N-1)]\}\|^2 > \sigma^2{}_n \\ \\ 0 & otherwise \end{cases}$$

Accordingly, beneficial methods may be provided for estimating the channel impulse response and/or for estimating the channel impulse coefficients based on the received signal and the reference signal in the time domain, such as e.g. based on the sum of the product of the received signal and the conjugate of the reference signal (pilot signal) in the time domain.

One of the exemplary benefits may be that the need for using the cyclic prefix for timing synchronization can be removed. That is, any shift in the time domain or usage of an improper window may introduce a phase offset in the frequency domain (frequency offset).

Such phase offset will introduce a carrier-dependent phase shift, wherein such phase shift in the frequency domain results in that the circular correlation peak does not exist anymore.

Hence, the above exemplary aspects making use of the correlation in the time domain with reference pilots may be used for time synchronization purposes as well as for channel estimation purposes.

That is, if the received symbol y is not correctly aligned with the reference value, then the circular correlation peak will not be available. Accordingly, the need for using the cyclic prefix for timing synchronization as in common methods can be removed.

Another one of the exemplary benefits may be that the channel impulse response may be estimated reliably even for channel impulse responses larger than the cyclic prefix (i.e. the cyclic prefix added as guard interval ahead of the symbol).

That is, the general assumption that the channel impulse response is less than the cyclic prefix may not hold for real unpredictable wireless channels. Multipath reflections could be received with larger power due to possible constructive combinations of different ray paths at the receiver side.

Similarly, this may be a large problem at cell edges in an urban canyon environment where the UE (user equipment) might receive multipath reflections due to multiple elements in the environment acting as reflectors.

According to the above methods of exemplary embodiments, however, the channel impulse response may be estimated reliably even for channel impulse responses larger than the cyclic prefix.

Another one of the exemplary benefits may be that interpolation in the frequency domain can be avoided.

That is, linear interpolation might not be the most optimal method in a mobile channel with low frequency coherence and time coherence. The fast Fourier transform (FFT) of the channel impulse response can be generated to accurately estimate the channel frequency response over all subcarriers and perform equalization in the frequency domain. Accordingly, interpolation in the frequency domain can be avoided.

Another one of the exemplary benefits may be that the timing synchronization is more robust since the length of the correlation sequence (e.g. the pilot PN-sequence) is larger than the generally used cyclic prefix.

The pilot sequences are more robust to interference from neighboring cells and do provide additional gains due to the autocorrelation properties of the pilot sequences (e.g. the pilot PN-sequences).

It has been demonstrated that the estimation method is feasible in an octave simulation. Fig. 2 shows the normalized mean square error of the channel estimate when using the exemplary methods of the present disclosure.

**Fig. 2** is an exemplary diagram shows the normalized mean square error MSE of the channel estimate as a function of the signal to noise ratio when using the exemplary methods of the present disclosure.

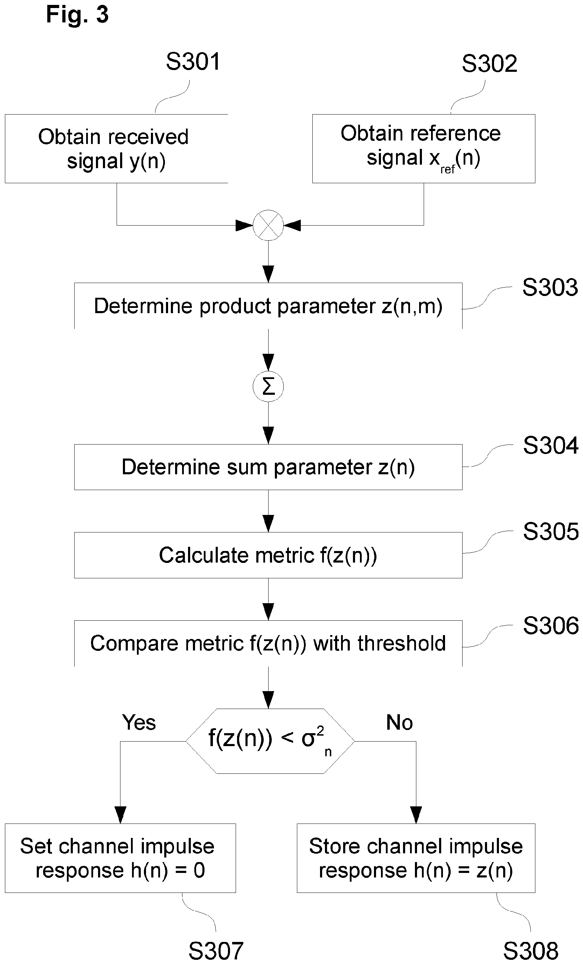

**Fig. 3** is an exemplary flow chart of an exemplary method of channel impulse response estimation in accordance with exemplary embodiments.

The method of Fig. 3 may be executed at a receiver device such as at a UE receiving an OFDM signal in a wireless communication system.

The method exemplarily includes a step S301 of obtaining the received signal *y(n)* in the time domain such as e.g. obtaining the received signal from the receive buffer (this may preferably include obtaining the signal *y(n)* from a circular buffer).

In some exemplary embodiments, the method may further include performing time shifting of the signal *y(n)* e.g. one or more time shifts by a sample number n'.

The method exemplarily includes a step S302 of obtaining a reference signal $x_{ref}(n)$ in the time domain.

This may include obtaining the reference signal from a buffer, preferably circular buffer, and/or generating the reference signal e.g. based on a pilot sequence or pilot PN-sequence used for one or more pilot signals.

That is, the step S302 may include obtaining or generating the pilot signal $x_{pilot}(n)$ in the time domain as the reference signal.

It is to be noted that the steps S301 and S302 may be executed in any order or substantially simultaneously in some exemplary embodiments.

The method exemplarily further includes step S303 of determining a product parameter *z(n,m)* in the time domain based on the obtained received signal and the obtained reference signal, specifically based on the obtained received signal and the conjugate of the obtained reference signal.

That is, in some exemplary embodiments, the step S303 may include determining the product parameter *z(n,m)* by multiplication of the received signal (optionally with the exemplary time shift by *m*, i.e. *y(n+m))* and the conjugate of the obtained reference signal, such as exemplarily discussed above:

$$z(n,m) = y(n+m) \cdot conj\left(x_{ref}(m)\right) \quad \text{with } m = 0, 1, \ldots, N-1,$$

The method exemplarily further includes step S304 of determining the sum parameter *z(n)* in the time domain based on one or more of the determined product parameters.

Exemplarily, the sum parameter *z(n)* may be determined by adding plural product parameter *z(n,m)* for different time shifts *m* if the received signal.

Exemplarily, the sum parameter *z(n)* may be determined by summing over all m, such as determining the sum parameter as

$$z(n) = \sum_{m=0}^{N-1} z(n,m)$$

The method exemplarily further includes step S305 of determining (e.g. calculating) a metric value *f(z(n))* of the sum parameter *z(n),* e.g. based on a metric of the Fourier transform of the sum parameter *z(n).*

The determined (calculated) metric value *f(z(n))* is exemplarily compared with a threshold value in step S306. Exemplarily, the threshold value may be taken as the noise variance $\sigma^2_n$.

Specifically, exemplarily in step S306, it may be checked whether the determined (calculated) metric value *f(z(n))* exceeds the threshold value, e.g. whether:

$$f\left(z(n)\right) = \sum \|FT\{[z(n,0), z(n,1), \ldots, z(n,N-1)]\}\|^2 > \sigma^2_n$$

Exemplarily, in case the determined (calculated) metric value is smaller than the threshold (or the metric value does not exceed the threshold) then the estimated channel impulse response coefficient *h(n)* may be set to zero (step S307).

Otherwise, in case the determined (calculated) metric value *f(z(n))* is equal or larger than the threshold (or the metric value does exceed the threshold) then it is estimated that the respective channel tap gives a significant contribution, and the estimated channel impulse response coefficient *h(n)* (channel response coefficient estimate $\hat{h}(n)$) may be determined based on the determined sum parameter *z(n)* in step S308, e.g. as:

$$\hat{h}(n) = z(n) = \sum_{m=0}^{N-1} z(n,m)$$

Specifically, step S308 may include storing the determined sum parameter *z(n)* as estimated channel response coefficient $\hat{h}(n)$.

Accordingly, the channel impulse response can reliably be estimated (and stored) based on the received signal and the reference signal in the time domain, in particular even when the channel impulse response is larger than the cyclic prefix.

In view of the above, while general channel response estimation concepts in OFDM systems usually are performed in the frequency domain, and such methods may suffer from the issue that multipath delays that are larger than the cyclic prefix may lead to inter symbol interference (ISI) that appear as noise in the frequency domain, channel response estimation according to the exemplary embodiments above may reliably allow to estimate the channel impulse response based on the received signal and the reference signal in the time domain, in particular even when the channel impulse response is larger than the cyclic prefix. That is, the effect of inter symbol interference (ISI) noise in the frequency domain may be avoided or removed.

Also, different from processing in the frequency domain which are sensitive to timing and frequency offsets, channel response estimation according to the exemplary embodiments may avoid such limitations.

Furthermore, the above concepts according to the exemplary embodiments may also be utilized to reliably and efficiently estimate frequency offsets.

This may be based again on the observation that the correlation property of pilot signals in OFDM systems, such as in case of LTE or 5G where pilot sequences are used based on PN-sequences, can be used, specifically the correlation property that the correlation result shows a peak when the symbols are completely aligned and otherwise the correlation result has a very low value (see Fig. 1 above).

Similar as above, the method may be used to compute the symbol by the product of the symbol with reference symbols at samples at which the channel taps have significant values.

Again, the circular autocorrelation in the frequency domain can be regarded equivalent to the computation of multiplication with a conjugate in the time domain, so that this property makes the following operation in the time domain equivalent to a circular autocorrelation (such as above) in the frequency domain.

$$z(n,m) = y(n+m) \cdot conj\Big(x_{pilot}(m)\Big) \quad \text{with } m = 0, 1, \ldots, N-1,$$

wherein *y(n)* is the received signal (e.g. obtained from a receiving buffer at the receiver side) in the time domain.

The above product parameter *z(n,m)* may be transferred into the frequency domain by applying FFT (fast Fourier transform) to compute *Z(n,k)* as below and locating the peak value in the frequency domain.

$$Z(n,k) = FT\{[z(n,0), z(n,1), \ldots, z(n,N-1)]\} \quad \text{with } k = 0, 1, \ldots, N-1,$$

wherein *k* denotes the subcarrier number.

If there is a frequency shift in the received symbols, the peak of the pilot sequence circular autocorrelation (e.g. in case of pilot PN-sequences) is also shifted by the value of the frequency offset. That is, the peak location gives the value of the frequency offset which is an integer multiple of the subcarrier spacing.

Accordingly, locating (finding) the peak in the autocorrelation, e.g. finding the peak in the Fourier transform of the product of the time domain reference signal and received data signal, may be used to determine the value of the integer frequency offset.

In view of the above, exemplarily, the value of the integer frequency offset may be estimated by finding the subcarrier number *k* of the peak (maximum) of the Fourier transform of the product of the time domain reference signal and received data signal (e.g. *Z(n,k)* as above), e.g. as follows:

$$\hat{p}(n) = \arg\max_{k} Z(n,k)$$

The above result of the determined integer frequency offset $\hat{p}(n)$ may be used to apply a corresponding compensation (frequency shift or phase shift) on the received signal *y(n),* e.g. as follows:

$$y(n) \rightarrow y(n) * \exp\left(-i\frac{2\pi}{N}\hat{p}(n)\,n\right)$$

Then, only a fractional frequency offset may remain. Such fractional frequency offset may be further compensated in some exemplary embodiments, e.g. as follows.

In some exemplary embodiments, the reference signal may be multiplied with multiple hypothesis values of the fractional frequency offset. The result of the correlation with the maximum value gives the estimate of the fractional frequency offset.

In other words, the fractional frequency offset $\hat{q}(n)$ may be estimated based on the result of the correlation with the maximum value of the respective products with multiple hypothesis values of the fractional frequency offset, e.g. as follows.

$$\hat{q}(n) = \arg\max_{q_i} \sum_{m=1}^{N-1} y(n+m) \cdot conj\left(x_{pilot}(m) * \exp\left(-i\frac{2\pi}{N}q_i\,n\right)\right)$$

with the hypothesis values $q_i \in \left\{\frac{1}{Q}, \frac{2}{Q}, \dots, \frac{Q-1}{Q}\right\}$ and y being preferably the corrected signal shifted by the integer frequency offset.

In the above, Q represents a preselected integer (e.g. selected based on the desired accuracy, e.g. equal or larger than 5, equal or larger than 20 or even equal or larger than 100, or based on or equal or similar to *N*).

The above result of the determined fractional frequency offset $\hat{q}(n)$ may be used to apply a further corresponding compensation (further frequency shift or phase shift) on the corrected signal *y(n),* e.g. as follows:

$$y(n) \rightarrow y(n) * \exp\left(-i\frac{2\pi}{N}\hat{q}(n)\,n\right)$$

In summary, the received signal may be corrected based on the determined integer frequency offset estimate $\hat{p}(n)$ and the determined fractional frequency offset estimate $\hat{q}(n)$, i.e. the signal corrected based on the determined integer frequency offset may be further corrected based on the determined fractional frequency offset.

Exemplarily, the received signal may be corrected by the sum of the determined integer and frequency offsets.

$$y(n) \rightarrow y(n) * \exp\left(-i\frac{2\pi}{N}(\hat{p}(n) + \hat{q}(n))\,n\right)$$

Accordingly, beneficial methods may be provided for estimating the frequency offset in the received signal based on the received signal and the reference signal in the time domain, such as e.g. based on the sum of the product of the received signal and the conjugate of the reference signal in the time domain.

One of the exemplary benefits may be that the exemplary methods above can be executed only using the current OFDM symbol. This removes the limitation of current methods which require storage of previous symbols.

Another one of the exemplary benefits may be that the exemplary methods above are independent of the cyclic prefix and symbol sizes. Therefore, the same algorithm concept could be applied to different subframe formats with at most minimal changes.

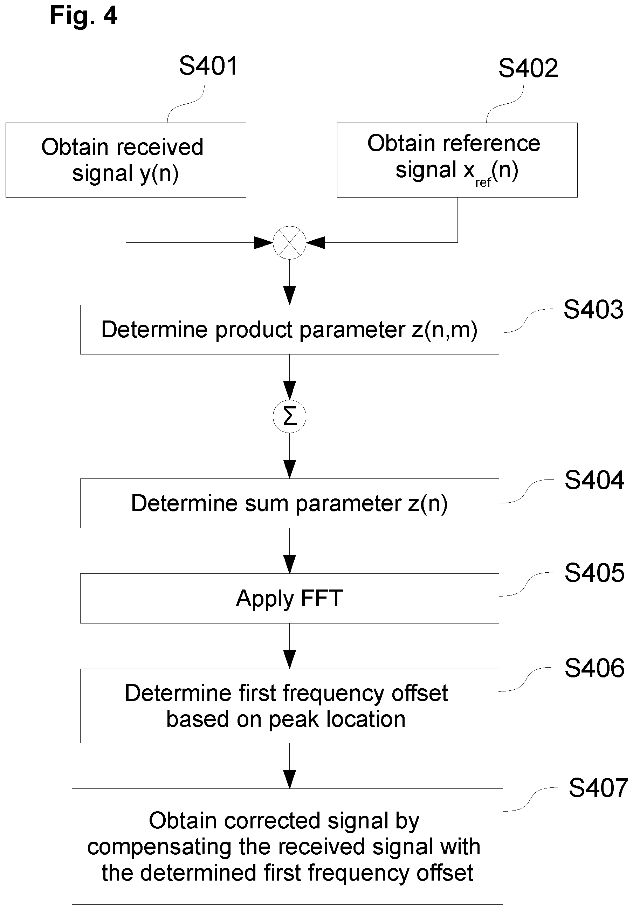

**Fig. 4** is an exemplary flow chart of an exemplary method of frequency offset estimation in accordance with exemplary embodiments.

The method of Fig. 4 may be executed at a receiver device such as at a UE receiving an OFDM signal in a wireless communication system.

The method exemplarily includes a step S401 of obtaining the received signal *y(n)* in the time domain such as e.g. obtaining the received signal from the receive buffer (this may preferably include obtaining the signal *y(n)* from a circular buffer).

In some exemplary embodiments, the method may further include performing time shifting of the signal *y(n)* e.g. one or more time shifts by a sample number n'.

The method exemplarily includes a step S402 of obtaining a reference signal $x_{ref}(n)$ in the time domain. This may include obtaining the reference signal from a buffer, preferably circular buffer, and/or generating the reference signal e.g. based on a pilot sequence or pilot PN-sequence used for one or more pilot signals.

That is, the step S402 may include obtaining or generating the pilot signal $x_{pilot}(n)$ in the time domain as the reference signal.

It is to be noted that the steps S401 and S402 may be executed in any order or substantially simultaneously in some exemplary embodiments.

The method exemplarily further includes step S403 of determining a product parameter $z(n,m)$ in the time domain based on the obtained received signal and the obtained reference signal, specifically based on the obtained received signal and the conjugate of the obtained reference signal.

That is, in some exemplary embodiments, the step S403 may include determining the product parameter $z(n,m)$ by multiplication of the received signal (optionally with the exemplary time shift by $m$, i.e. $y(n+m)$) and the conjugate of the obtained reference signal, such as exemplarily discussed above:

$$z(n,m) = y(n+m) \cdot conj\left(x_{ref}(m)\right) \quad \text{with } m = 0, 1, \ldots, N-1,$$

The method exemplarily further includes step S404 of determining a sum parameter $z(n)$ in the time domain based on one or more of the determined product parameters.

Exemplarily, the sum parameter $z(n)$ may be determined by adding plural product parameter $z(n,m)$ for different time shifts $m$ if the received signal.

Exemplarily, the sum parameter $z(n)$ may be determined by summing over all m, such as determining the sum parameter as

$$z(n) = \sum_{m=0}^{N-1} z(n,m)$$

Further exemplarily, the method includes a step S405 of executing a fast Fourier transform on the product parameters $z(n,m)$ of the respective sum parameters $z(n)$:

$$Z(n,k) = FT\{[z(n,0), z(n,1), \ldots, z(n,N-1)]\} \quad \text{with } k = 0, 1, \ldots, N-1,$$

Further exemplarily, preferably in the frequency domain, the method further includes determining a peak location of the fast Fourier transform on the product parameters $z(n,m)$ of the respective sum parameters $z(n)$.

Further exemplarily, the method includes the step S406 of determining a first frequency offset (integer frequency offset) based on the determined peak location, preferably as determining the first frequency offset $p(n)$ preferably as the respective subcarrier number $k$ corresponding to the determined peak location of the FFT in the frequency domain, such as e.g.:

$$\hat{p}(n) = \arg\max_{k} Z(n,k)$$

Further exemplarily, the method includes the step S407 of compensating the received signal by a frequency offset (phase shift) based on the determined first frequency offset, such as e.g. by multiplication with a phase factor including the determined first frequency offset.

For example, the received signal in the time domain may by multiplied by a phase factor as follows:

$$y(n) \rightarrow y(n) * \exp\left(-i\frac{2\pi}{N}\hat{p}(n)\,n\right)$$

The above exemplary method allows to reliably determine a first frequency offset (integer frequency offset) and correcting/compensating the received signal by the determined first frequency offset, wherein the need for using the cyclic prefix for timing synchronization as in common methods can be removed.

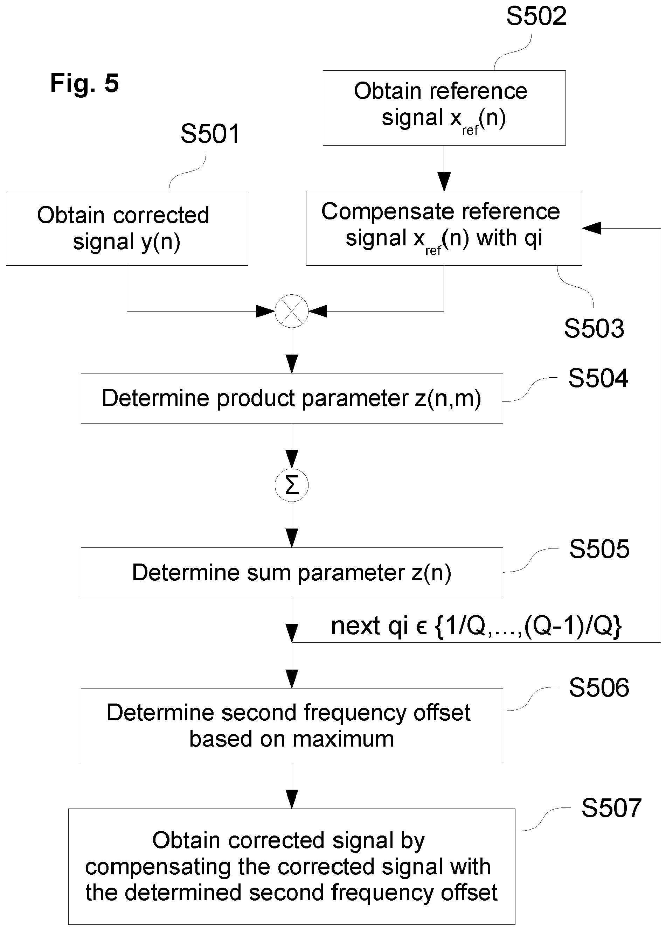

**Fig. 5** is an exemplary flow chart of an exemplary method of frequency offset estimation in accordance with exemplary embodiments.

The method of Fig. 5 may be executed at a receiver device such as at a UE receiving an OFDM signal in a wireless communication system.

Specifically, the method of Fig. 5 may be applied in addition to the method of Fig. 4 based on the result of the method of Fig. 4.

The method exemplarily includes a step S501 of obtaining the corrected signal $y(n)$ in the time domain (e.g. from step S407 of Fig. 4).

The method exemplarily includes a step S502 of obtaining a reference signal $x_{ref}(n)$ in the time domain. This may include obtaining the reference signal from a buffer, preferably circular buffer, and/or generating the reference signal e.g. based on a pilot sequence or pilot PN-sequence used for one or more pilot signals.

That is, the step S502 may include obtaining or generating the pilot signal $x_{pilot}(n)$ in the time domain as the reference signal. Also, the result from step S402 may be used.

The method further exemplarily includes a step S503 in which the obtained reference signal is multiplied with a phase shift (frequency compensation) in accordance with a fractional hypothesis offset value $q_1 = 1/Q$, wherein Q is an integer:

$$x_{pilot}(m) * \exp\left(-i\frac{2\pi}{N}\frac{1}{Q}\,n\right)$$

The method exemplarily further includes step S504 of determining a product parameter $z(n,m)$ in the time domain based on the obtained corrected signal and the compensated reference signal, specifically based on the corrected signal and the conjugate of the compensated reference signal.

That is, in some exemplary embodiments, the step S504 may include determining the product parameter $z(n,m)$ by multiplication of the corrected signal (optionally with the exemplary time shift by $m$, i.e. $y(n+m)$) and the conjugate of the compensated reference signal, such as exemplarily discussed above:

$$z(n,m) = y(n+m) \cdot conj\left(x_{pilot}(m) * \exp\left(-i\frac{2\pi}{N}\frac{1}{Q}\,n\right)\right) \quad \text{with } m = 0, 1, \ldots, N-1,$$

The method exemplarily further includes step S505 of determining a sum parameter $z(n)$ in the time domain based on one or more of the determined product parameters.

Exemplarily, the sum parameter $z(n)$ may be determined by adding plural product parameter $z(n,m)$ for different time shifts $m$ if the received signal.

Exemplarily, the sum parameter $z(n)$ may be determined by summing over all m, such as determining the sum parameter as

$$z(n) = \sum_{m=0}^{N-1} z(n,m)$$

$$z(n) = \sum_{m=1}^{N-1} y(n+m) \cdot conj\left(x_{pilot}(m) * \exp\left(-i\frac{2\pi}{N}\frac{1}{Q}\,n\right)\right)$$

Further exemplarily, the steps S503 to S505 are repeated for all hypothesis values:

$$q_i \in \left\{\frac{1}{Q}, \frac{2}{Q}, \ldots, \frac{Q-1}{Q}\right\}$$

The method further exemplarily includes a step S506 of determining a second frequency offset (fractional frequency offset) based on the maximum of the determined sum parameters, preferably as determining the second frequency offset $q(n)$ preferably as the respective fraction parameter qi corresponding to the determined maximum, such as e.g.:

$$\hat{q}(n) = \arg \max_{q_i} \sum_{m=1}^{N-1} y(n+m) \cdot conj\left(x_{pilot}(m) * \exp\left(-i\frac{2\pi}{N}q_i\,n\right)\right)$$

Further exemplarily, the method includes the step S507 of compensating the signal obtained in step S501 such as the corrected signal from step S407 by another frequency offset (phase shift) based on the determined second frequency offset, such as e.g. by multiplication with a phase factor including the determined second frequency offset.

For example, the received signal in the time domain may by multiplied by a phase factor as follows:

$$y(n) \longrightarrow y(n) * \exp\left(-i\frac{2\pi}{N}\hat{q}(n)\,n\right)$$

The above exemplary method allows to reliably determine a further second frequency offset (fractional frequency offset) and further correcting/compensating the signal by the determined second frequency offset, wherein the need for using the cyclic prefix for timing synchronization as in common methods can be removed.

Common frequency offset estimation methods in OFDM systems need the use of the cyclic prefix for generating/estimating a fractional frequency offset and furthermore often need the storage of the previous symbols for generating/estimating an integer frequency offset, they need overhead in the frame structure of the cyclic prefix and also require further storage for previous OFDM symbols, and in case the previous symbols have another frequency offset than the current symbol the integer frequency offset estimation may not work at all.

In contrast, the frequency offset estimation methods of above exemplary embodiments do improve the estimation precision and may decrease the complexity of the frequency offset estimation significantly, specifically in OFDM systems without cyclic prefix. Furthermore, storage requirements are made more efficient since the previous OFDM symbols do not need to be stored. Herein, the integer frequency offset and the fractional frequency offset can be reliably and efficiently estimated without using cyclic prefixes.

The underlying idea is to use the Fourier transform of the correlation between the received signal and the generated reference signal for both, estimating the integer frequency offset and estimating the fractional frequency offset.

This allows to reduce complexity, provide a more simplified frequency offset estimation device architecture by only using simple processing operations such as summation and complex multiplication and FFT operations, maximum determinations and using a limited set of fractional hypothesis values. Also, the methods may be applied to different OFDM systems with low transfer efforts.

It also provides for improved power in highly mobile wireless multipath environments, since the frequency offset can be performed for each individual multipath component independently before combination. The signal processing path can be provided in a simplified manner and all estimations can be implemented in the channel estimation block at the receiver.

The integrated frequency offset compensation can be achieved reliably and efficiently by moving the Fourier transform elements into a circular buffer and multiplying them with complex exponentials.

Furthermore, methods according to exemplary embodiments may be provided to reliably and efficiently estimate signal power and interferer power (of interfering cells) and/or to estimate the signal-to-interference-plus-noise ratio (SINR), specifically preferably based on the channel impulse response.

The accurate SINR estimation by use of multi path components, which arrive at a delay larger than cyclic prefix duration, may pose a difficult problem in OFDM systems. However, the additional multi-path components may be very suitable for the estimation of interference power since the distance from the UE to the interference base (such as an interfering cell) may be larger typically than then distance to the base station (e.g. of the serving cell).

The accurate estimate of the signal power and interference power may improve the receiving capabilities by additional techniques such as interference suppression, interference cancellation and any combination thereof. The following methods and concepts improve the estimation of signal power and interference power in OFDM-systems having multiple cells.

The generation / estimation of signal power and interference power by using the channel impulse response is a novel concept, in particular using channel impulse responses with multi path delays larger than the cyclic prefix.

The following benefits may be achieved. The methods improve robustness of the estimation of signal power and interference power against inter symbol interference. Also, it may lead to valuable processing gains in otherwise interference-limited local networks when interferers may be suppressed by algorithms such as MMSE. Also, the occurrence of erroneous handovers may be avoided by accurate estimation of the SINR. Measuring devices can be made more precise in single frequency spectra e.g. the terrestrial broadcasting network.

Regular LTE 5G reference and synchronization signals like the Primary Synchronization Signal (PSS) and the Secondary Synchronization Signal (SSS) typically use Cell-specific reference signals (pilot signals), for example, based on mutually orthogonal PN-sequences.

The mutually orthogonal characteristics of PN-sequences result in very low cross correlation outputs. This property can be used to estimate the channel impulse response of neighboring cells (interfering cells) using the time domain correlation of pilot sequences.

Herein, the channel impulse response can exemplarily be estimated based on the channel response estimation methods of exemplary embodiments above.

Accordingly, exemplary methods can be provided in which the signal power and interferer power, e.g. for estimating the signal-to-interference-plus-noise ratio (SINR), are calculated/estimated based on the channel impulse response (e.g. determined in the time domain). This was not possible before in common methods since these rely on SINR calculations depending on the frequency domain estimation of signal and interferer power.

In exemplary methods in accordance with exemplary embodiments, the power of the serving cell and the interfering cell(s) can be determined based on the estimated channel impulse response (e.g. in the time domain).

For example, the power of the serving cell and the interfering cell(s) can be determined based on the sum of the energy of the estimated channel impulse response:

$$\hat{s}(n) = \sum_{k=0}^{L-1} \left\| \hat{h}(n,k) \right\|^2$$

wherein n is the subframe number or slot number.

Accordingly, the power of the serving cell can be determined based on the sum of the energy of the estimated channel impulse response for the serving cell signals:

$$\hat{s}_{serving}(n) = \sum_{k=0}^{L-1} \left\| \hat{h}_{serving}(n,k) \right\|^2$$

Accordingly, the power of the interfering cell (e.g. neighboring cell) can be determined based on the sum of the energy of the estimated channel impulse response for the interfering cell signals:

$$\hat{s}_{interfering}(n) = \sum_{k=0}^{L-1} \left\| \hat{h}_{interfering}(n,k) \right\|^2$$

Then, the signal-to-interference-plus-noise ratio (SINR) can be efficiently and reliably be determined based on the estimated signal powers of the serving cell and the interfering cell(s) and the noise variance in the time domain:

$$\widehat{SINR}(n) = \frac{\hat{s}_{serving}(n)}{\sum \hat{s}_{interfering}(n) + \widehat{\sigma_n^2}}$$

wherein $\sigma_n^2$ is the noise variance.

In the above exemplary methods, the channel estimation can be performed similar to the exemplary channel estimations further above.

Accordingly, the channel impulse response for the serving cell and interfering cell(s) can reliably be estimated based on the received signal and the respective reference signals in the time domain even when the channel impulse response is larger than the cyclic prefix.

Beneficial methods may be provided for estimating the channel impulse response and/or for estimating the channel impulse coefficients for the serving cell and the interfering cell(s) based on the received signal and the reference signals in the time domain, such as e.g. based on the sum of the product of the received signal and the conjugate of the reference signal in the time domain.

In view of the above, while general channel response estimation concepts in OFDM systems usually are performed in the frequency domain, and such methods may suffer from the issue that multipath delays that are larger than the cyclic prefix may lead to inter symbol interference (ISI) that appear as noise in the frequency domain, channel response estimation according to the exemplary embodiments may reliably estimate the channel impulse response based on the received signal and the reference signal in the time domain even when the channel impulse response is larger than the cyclic prefix. That is, the effect of inter symbol interference (ISI) noise in the frequency domain may be removed.

Furthermore, one of the exemplary benefits may be that, with such SINR estimation, the FFT window can be accurately placed depending on the SINR so that the window placement maximizes the SINR rather than only the signal power. This is particularly beneficial for good reception in challenging cell edge scenarios.

Another one of the exemplary benefits may be that an accurate SINR value can be used to suppress interference from neighboring cells in the received signal using an MMSE (Minimum Mean Square Error) receiver in the frequency domain or the time domain.

Furthermore, another one of the exemplary benefits may be that the estimation allows to accurately estimate the SINR when the interfering cell uses a different slot format from the serving cell or if the transmission contains multiple transmission formats. Otherwise, it would be difficult to accurately estimate the SINR in the frequency domain without performing an FFT on the same received signal using a different FFT size.

Another one of the exemplary benefits may be that the estimation allows to identify contributions from different cells, i.e. multipath contributions with different relative powers can be identified in a single frequency network.

Another one of the exemplary benefits may be that an accurate SINR estimate can be generated by considering only the signal and interferer power contained in the FFT window.

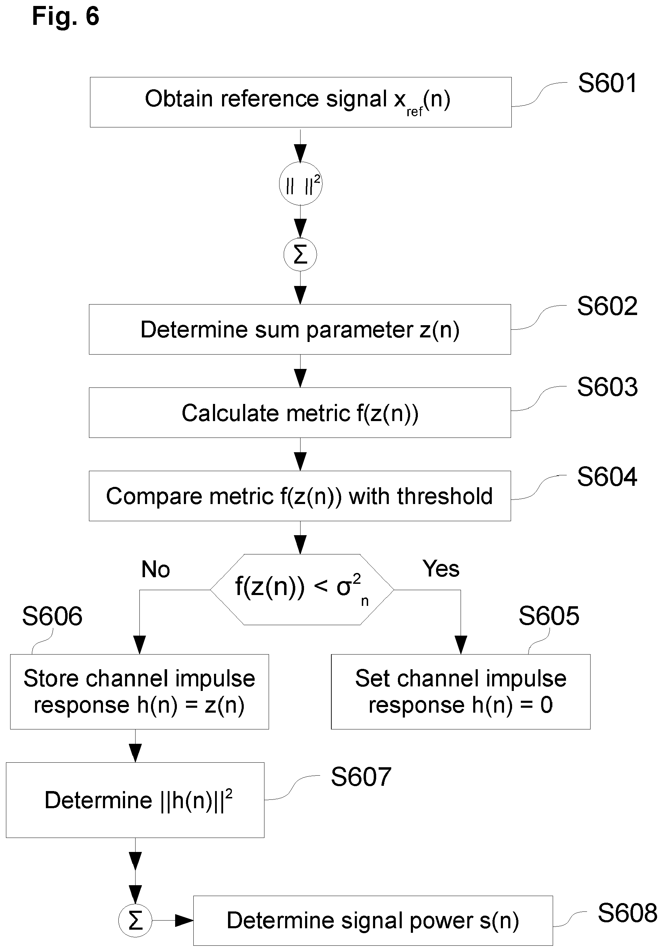

**Fig. 6** is an exemplary flow chart of an exemplary method of signal power estimation in accordance with exemplary embodiments.

The method of Fig. 6 may be executed at a receiver device such as at a UE receiving an OFDM signal in a wireless communication system.

The method exemplarily includes a step S601 of obtaining a reference signal $x_{ref}(n)$ in the time domain. This may include obtaining the reference signal from a buffer, preferably circular buffer, and/or generating the reference signal e.g. based on a pilot sequence or pilot PN-sequence used for one or more pilot signals. That is, the step S601 may include obtaining or generating the pilot signal $x_{pilot}(n)$ in the time domain as the reference signal.

Exemplarily, the reference signal (pilot signal / pilot sequence) may, in preferred exemplary embodiments, be provided in a cell specific way so that the serving cell pilot signals/pilot sequence(s) is/are different from the pilot signals/pilot sequence(s) used by other cells such as their neighboring cells (potential interfering cells).

For estimating the signal power of the serving cell's signal at the receiver location, the step S601 exemplarily obtains or generates the reference signal associated with the serving cell (e.g. based on pilot sequence(s) associated with the serving cell).

Otherwise, for estimating the signal power of a respective potential interfering cell (such as e.g. a neighboring cell of the serving cell) at the receiver location, the step S601 exemplarily obtains or generates the reference signal associated with the respective interfering cell (e.g. based on pilot sequence(s) associated with the interfering cell).

The method exemplarily further includes step S602 of determining a sum parameter $z(n)$ in the time domain based on the obtained reference signals.

That is, in some exemplary embodiments, the step S602 may include determining the Euclidean square of the reference signals and subsequent summation. For example, the sum parameter $z(n)$ may be determined based on the sum of the Euclidean squares of the reference signals.

Similar as in above exemplary embodiments, the estimated channel tap in the impulse response for n may be set to zero if its contribution is to be considered below a certain threshold, such as a metric such as e.g. the noise variance $\sigma^2_n$.

That is, exemplarily, the method exemplarily further includes step S603 of determining (e.g. calculating) a metric value $f(z(n))$ of the sum parameter $z(n)$, e.g. based on a metric of the Fourier transform of the sum parameter z(n).

The determined (calculated) metric value $f(z(n))$ is exemplarily compared with a threshold value in step S604. Exemplarily, the threshold value may be taken as the noise variance $\sigma^2_n$.

Specifically, exemplarily in step S604, it may be checked whether the determined (calculated) metric value $f(z(n))$ is below the threshold value, e.g. whether:

$$f\big(z(n)\big) < \ \sigma^2{}_n$$

Exemplarily, in case the determined (calculated) metric value is smaller than the threshold (or the metric value does not exceed the threshold) then the estimated channel impulse response coefficient h(n) may be set to zero (step S605).

Otherwise, in case the determined (calculated) metric value $f(z(n))$ is equal or larger than the threshold (or the metric value does exceed the threshold) then it is estimated that the respective channel tap gives a significant contribution, and the estimated channel impulse response coefficient $h(n)$ may be determined based on the determined sum parameter $z(n)$ in step S606, e.g. as:

$$\hat{h}(n) = z(n)$$

The method further exemplarily includes determining the parameter indicative of the energy in the channel impulse response (step S607 of determining $\|h(n)\|^2$) based on the estimated channel impulse response coefficient $h(n)$ for the subframe number $n$ (slotnumber $n$).

The steps of the method may then be repeated for all $n$ to determine the plural estimated channel impulse response coefficients $h(n)$ for all $n$ and to add the resulting energy parameters in step S608 so as to determine an estimate of the signal power $s(n)$.

For example, the power of the serving cell and the interfering cell(s) can be determined based on the sum of the energy of the estimated channel impulse response:

$$\hat{s}(n) = \sum_{k=0}^{L-1} \left\|\hat{h}(n,k)\right\|^2$$

wherein $n$ is the subframe number or slot number.

Depending on whether the reference signal is obtained for the serving cell or the potential interfering cell (such as e.g. a neighboring cell), the serving cell signal power or the interfering cell signal power may be determined.

Accordingly, the power of the serving cell can be determined based on the sum of the energy of the estimated channel impulse response for the serving cell signals:

$$\hat{s}_{serving}(n) = \sum_{k=0}^{L-1} \left\|\hat{h}_{serving}(n,k)\right\|^2$$

Accordingly, the power of the interfering cell (e.g. neighboring cell) can be determined based on the sum of the energy of the estimated channel impulse response for the interfering cell signals:

$$\hat{s}_{interfering}(n) = \sum_{k=0}^{L-1} \left\|\hat{h}_{interfering}(n,k)\right\|^2$$

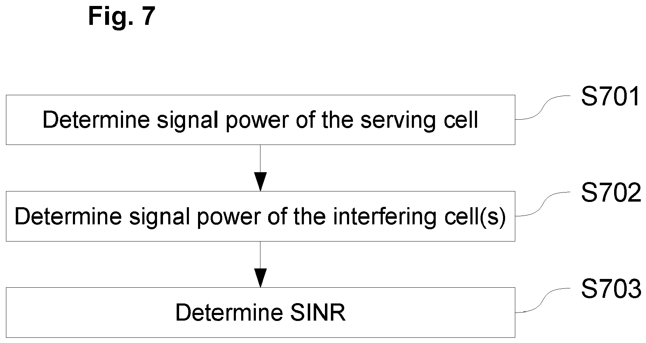

**Fig. 7** is an exemplary flow chart of an exemplary method of SINR estimation in accordance with exemplary embodiments.

The method of Fig. 7 may be executed at a receiver device such as at a UE receiving an OFDM signal in a wireless communication system.

The method exemplarily includes a step S701 of determining (estimating) the signal power of the serving cell, for example as discussed above, e.g. based on the method of Fig. 6 based on the cell-specific pilot sequence reference signal of the serving cell.

The method exemplarily includes a step S702 of determining (estimating) the signal power of the interfering cell(s), for example as discussed above, e.g. based on the method of Fig. 6 based on the cell-specific pilot sequence reference signal of the interfering cell(s).

The method further exemplarily includes a step S703 of determining (estimating) the signal-to-interference-plus-noise ratio (SINR) based on the estimated signal powers of the serving cell and the interfering cell(s) and the noise variance in the time domain:

$$\widehat{SINR}(n) = \frac{\hat{S}_{serving}(n)}{\hat{S}_{interfering}(n) + \widehat{\sigma_n^2}}$$

wherein $\sigma_n^2$ is the noise variance.

Furthermore, methods according to exemplary embodiments may be provided to reliably and efficiently execute equalization of received symbols, preferably in the time domain, in particular equalization of received symbols with insufficient cyclic prefix duration in the time domain.

In OFDM-systems typically it may be assumed that the channel impulse response time is lower than the cyclic prefix duration. However, in real wireless channels it is possible that there may be multiple signal paths for which the signals may be received at the receiver at different signal powers. That is, the assumption that the channel impulse response time is lower than the cyclic prefix duration may not hold true in real scenarios.

If the channel impulse response is larger than the cyclic prefix duration, this may lead to inter symbol interference (ISI) and, in case of occurrence of ISI, the system may need to be redesigned with longer cyclic prefix duration. However, larger cyclic prefix duration may lead to decreased system efficiency. If the system is not redesigned, then the occurrence of ISI may lead to lower receive signal quality and worse receive signal power.

The following exemplary methods of executing equalization of received symbols provide benefits of avoiding ISI by the equalization method, even if the channel impulse response time may be larger than the cyclic prefix duration.

Exemplary methods provide new ways of generating / determining the equalizer coefficients and/or new ways of modelling the data symbols.

Accordingly, exemplary methods for equalization of received symbols as described below may provide benefits such as the OFDM-system becoming more tolerant and/or more robust against ISI, in particular in case the channel impulse response profile may become longer than the cyclic prefix duration. This not only improves equalization by avoiding or removing ISI but also allows to combine multi paths components so as to achieve better signal quality compared to the commonly known equalization in the frequency domain.

In view of the above, methods according to exemplary embodiments as follows are provided to reliably and efficiently execute equalization of received symbols, preferably in the time domain, in particular equalization of received symbols with insufficient cyclic prefix duration in the time domain.

Executing equalization in the time domain alleviates the problem of ISI and specifically avoids ISI even in case the channel impulse response time may be larger than the cyclic prefix duration.

Furthermore, using such methods allows to directly pass the received signal to the FFT (Fast Fourier Transform) and no channel estimation processing is required in the transform domain.

Exemplarily, the equalization may be performed in the time domain. Further exemplarily, the equalization may be performed using a linear minimum mean square error (LMMSE) filter, such as e.g. a Wiener filter $\boldsymbol{w}$.

Exemplarily, the Wiener filter $\boldsymbol{w}$ (e.g. as a matrix) may be given in a general form as follows:

$$\boldsymbol{w} = \boldsymbol{R}_{xy}\left(\boldsymbol{R}_{yy}\right)^{-1}$$

Herein, the covariance matrix $\boldsymbol{R}_{xy}$ can be determined as follows:

$$\boldsymbol{R}_{xy} = E\left[\boldsymbol{xy}^H\right] = E\left[\boldsymbol{x}(\boldsymbol{Hx} + \boldsymbol{n})^H\right]),$$

where E[.] means expectation and $(.)^H$ is the conjugate transpose, and using the time domain matrix-vector notation equation of the transmit-receive relation:

$$\boldsymbol{y} = \boldsymbol{Hx} + \boldsymbol{n}$$

with $\boldsymbol{x}$ being the time domain transmitted signal vector $(x(0), ..., x(N-1))^T$, with $\boldsymbol{y}$ being the time domain receive signal vector $(y(0), ..., y(N-1))^T$, with $H$ being the time domain channel matrix, and with $n$ being a time domain additive noise vector (additive noise in the time domain).

Furthermore, the covariance matrix $R_{xy}$ can be continued to be calculated as follows:

$$R_{xy} = E[x(Hx + n)^H] = E[xx^H H^H + xn^H] =$$

$$= E[xx^H H^H] = E[xx^H]H^H = R_{xx}H$$

Accordingly, $R_{xy}$ can be determined as $R_{xx}H$.

Moreover, the covariance matrix $R_{yy}$ can be determined as follows:

$$R_{yy} = E[yy^H] = E[(Hx + n)(Hx + n)^H]),$$

where E[.] again means expectation and $(.)^H$ again is the conjugate transpose, and using again the time domain matrix-vector notation equation of the transmit-receive relation:

$$y = Hx + n$$

with x being the time domain transmitted signal vector $(x(0), ..., x(N-1))^T$, with $y$ being the time domain receive signal vector $(y(0), ..., y(N-1))^T$, with $H$ being the time domain channel matrix, and with $n$ being a time domain additive noise vector (additive noise in the time domain).

Furthermore, the covariance matrix $R_{yy}$ can be continued to be calculated as follows:

$$R_{yy} = E[(Hx + n)(Hx + n)^H] = E[(Hx + n)(x^H H^H + n^H)] =$$

$$= E[Hxx^H H^H + Hxn^H + nx^H H^H + nn^H] = E[Hxx^H H^H + nn^H] =$$

$$= HE[xx^H]H^H + E[nn^H] = HR_{xx}H^H + R_{nn}$$

Accordingly, $R_{yy}$ can be determined as $HR_{xx}H^H + R_{nn}$.

Furthermore, in view of the above, the Wiener filter $w$ (e.g. as a matrix) may be given as follows:

$$w = R_{xy}(R_{yy})^{-1} = R_{xx}H(HR_{xx}H^H + R_{nn})^{-1}$$

To calculate the wiener filter above, the channel estimate and statistical properties of the noise and the require signal x are needed.

Then equalization may be performed based on the channel matrix $H$ based on the channel estimate, $R_{nn}$ based on noise or noise assumptions, and the covariance matrix $R_{xx}$ as follows:

1) Calculate the matrix $R_{yy}$ as $HR_{xx}H^H + R_{nn}$
2) Invert the determined matrix $R_{yy}$ to determine the inverse matrix $(R_{yy})^{-1}$
3) Calculate the matrix $R_{xy}$ as $R_{xx}H$
4) Calculate the filter matrix $w$ as the matrix product of the matrices $R_{xy}$ and $(R_{yy})^{-1}$
5) Obtain the received samples y(n)
6) Apply (e.g. multiply onto y) the filter matrix w to obtain the equalized output x(n)

Exemplarily, the noise covariance can be estimated by assuming that the noise is an identically distributed ideal Gaussian noise, exemplarily with mean and/or variance values characterizing the noise probability distribution function.

The required signal x is the OFDM symbol in the time domain. Exemplary embodiments herein introduce methods to estimate the probability distribution of the time domain OFDM symbol.

For example, one or more of the following steps may be performed to generate the pdf (probability distribution function) of the time domain OFDM symbol:

1) The symbols in the frequency domain may exemplarily be assumed to have a uniform distribution, e.g. with zero mean and/or a specific variance.

2) The inverse Fourier transform may be performed as a multiplication of the frequency domain data with (e.g. complex) exponentials followed by summation (see e.g. exemplary embodiments above). That is, exemplarily, the joint pdf of multiplication of a uniform pdf with complex exponential can be derived.

3) Further exemplarily, the central limit theorem (which states that a sum of i.i.d. distributions converges to a Gaussian distribution) can be used to estimate the variance and/or mean of the resulting Gaussian distributed OFDM symbols.

Further exemplarily, in some cases, e.g. for special cases when the symbol number is a power of two (such as n = 0, N/2, N/4, N/16,... where N is the IFFT size), the probability distribution of the complex exponential may be different from a uniformly distributed.

The reason is that, for these values of n (such as n = 0, N/2, N/4, N/16,... where N is the IFFT size), the complex exponential takes on a limited number of values (e.g. for n=0 the exponential exp(i*2*pi/N*n*k) takes only 1 value, and for n = N/2 the complex exponential only gives two distinct values, etc.). Therefore, the variance of the OFDM symbol at these symbol numbers may be different from other symbol numbers.

Accordingly, the exemplary methods herein propose to find a more exact pdf and/or more exact statistical properties of the generated OFDM symbols, and the pdf of the complex exponential as well as special case symbols can be taken into account.

Beneficially, using the calculated probability distribution of the transmitted OFDM symbols $x(n)$ in the time domain, it becomes possible to generate an adaptive filter suited to the statistical properties of the ideal/wanted signal. Therefore, it becomes feasible to equalize the received symbol $y(n)$ accurately in the time domain.

Furthermore, it becomes possible to generate an accurate estimate for the Peak to average power ratio using the generated probability distribution.

Furthermore, beneficially, the above methods can be used to equalize the symbols in the time domain even when ISI occurs and even when ISI is extremely high, e.g. with cell edges in urban canyon scenarios, or transmissions in single frequency networks with shorter cyclic prefix.

In view of the above, channel equalization in exemplary embodiments may be executed according to the following.

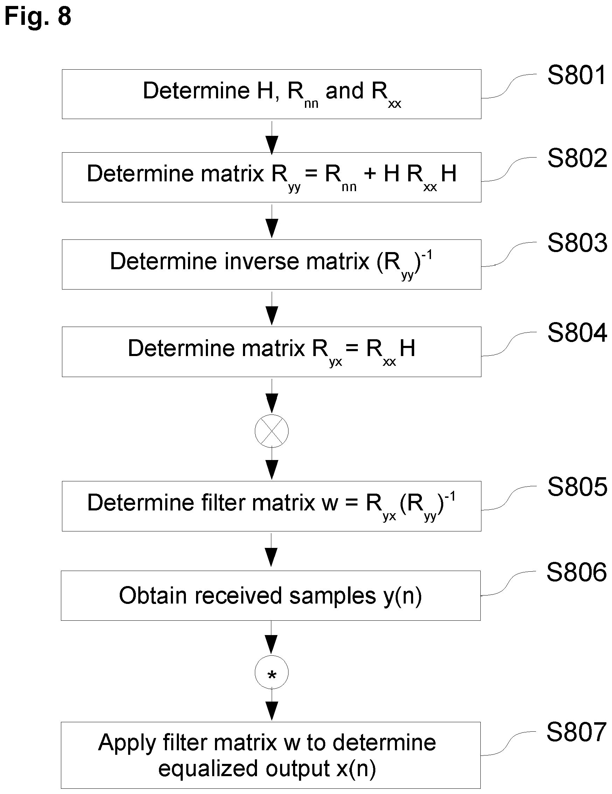

**Fig. 8** is an exemplary flow chart of an exemplary method of equalization in accordance with exemplary embodiments.

The method of Fig. 8 may be executed at a receiver device such as at a UE receiving an OFDM signal in a wireless communication system.

The method exemplarily includes a step S801 of determining (estimating) the channel matrix $\boldsymbol{H}$, the noise covariance matrix $\boldsymbol{R}_{nn}$ and the signal covariance matrix $\boldsymbol{R}_{xx}$.

For example, the channel matrix $\boldsymbol{H}$ may be determined / estimated based on channel estimation, e.g. based on the method of one of the above exemplary embodiments.

Further exemplarily, the noise covariance matrix $\boldsymbol{R}_{nn}$ may be determined / estimated based on the assumption that the noise is an identically distributed ideal Gaussian noise, exemplarily with mean and/or variance values characterizing the noise probability distribution function.

Further exemplarily, the signal covariance matrix $\boldsymbol{R}_{xx}$ may be determined / estimated based on an estimate of the probability distribution of the time domain OFDM symbols.

For example, one or more of the following steps may be performed to generate the pdf (probability distribution function) of the time domain OFDM symbols:

1) The symbols in the frequency domain may exemplarily be assumed to have a uniform distribution, e.g. with zero mean and/or a specific variance.

2) The inverse Fourier transform may be performed as a multiplication of the frequency domain data with (e.g. complex) exponentials followed by summation (see e.g. exemplary embodiments above). That is, exemplarily, the joint pdf of multiplication of a uniform pdf with complex exponential can be derived.

3) Further exemplarily, the central limit theorem (which states that a sum of i.i.d. distributions converges to a Gaussian distribution) can be used to estimate the variance and/or mean of the resulting Gaussian distributed OFDM symbols.

Further exemplarily, in some cases, e.g. for special cases when the symbol number is a power of two (such as n = 0, N/2, N/4, N/16,... where N is the IFFT size), the probability distribution of the complex exponential may be different from a uniformly distributed.

The reason is that, for these values of n (such as n = 0, N/2, N/4, N/16,... where N is the IFFT size), the complex exponential takes on a limited number of values (e.g. for n=0 the exponential exp(i*2*pi/N*n*k) takes only 1 value, and for n = N/2 the complex exponential only gives two distinct values, etc.). Therefore, the variance of the OFDM symbol at these symbol numbers may be different from other symbol numbers.

Accordingly, the exemplary methods herein propose to find a more exact pdf and/or more exact statistical properties of the generated OFDM symbols, and the pdf of the complex exponential as well as special case symbols can be taken into account.

The method of Fig. 8 exemplarily further includes the step S802 of calculating / determining the covariance matrix $R_{yy}$ as $HR_{xx}H^H + R_{nn}$ and a further step S803 of inverting the determined matrix $R_{yy}$ to determine the inverse matrix $(R_{yy})^{-1}$.

The method of Fig. 8 exemplarily further includes the step S804 of calculating the covariance matrix $R_{xy}$ as $R_{xx}H$.

It is to be noted that the steps S802, S803 and S804 may be executed in different orders and specifically step S804 may be executed before or after any of the steps S802 and S803, or simultaneously.

The method exemplarily further includes the step S805 of determining / calculating the filter matrix $w$ as matrix product of matrices $R_{xy}$ and $(R_{yy})^{-1}$.

The method exemplarily further includes the step S806 of obtaining the received samples $y(n)$ and step S807 of applying (e.g. multiply onto $y$) the filter matrix $w$ to obtain the equalized output $\underline{x}(n)$ of the signal after equalization based on the determined filter matrix.

Exemplarily, the filter matrix may represent an LMMSE filter or Wiener filter.

Exemplary aspects and embodiments of the present invention may be implemented in hardware, firmware, or software, or a combination of both (e.g., as a programmable logic array). Unless otherwise specified, the algorithms or processes included as part of the invention are not inherently related to any particular computer or other apparatus. In particular, various general-purpose machines may be used with programs written in accordance with the teachings herein, or it may be more convenient to construct more specialized apparatus (e.g., integrated circuits) to perform the required method steps. Thus, the invention may be implemented in one or more computer programs executing on one or more programmable computer systems (e.g., an implementation of any of the elements of the figures) each comprising at least one processor, at least one data storage system (including volatile and non-volatile memory and/or storage elements), at least one input device or port, and at least one output device or port. Program code is applied to input data to perform the functions described herein and generate output information. The output information is applied to one or more output devices, in known fashion.

Each such program may be implemented in any desired computer language (including machine, assembly, or high-level procedural, logical, or object-oriented programming languages) to communicate with a computer system. In any case, the language may be a compiled or interpreted language.

For example, when implemented by computer software instruction sequences, various functions and steps of embodiments of the invention may be implemented by multithreaded software instruction sequences running in suitable digital signal processing hardware, in which case the various devices, steps, and functions of the embodiments may correspond to portions of the software instructions.

Each such computer program is preferably stored on or downloaded to a storage media or device (e.g., solid state memory or media, or magnetic or optical media) readable by a general or special purpose programmable computer, for configuring and operating the computer when the storage media or device is read by the computer system to perform the procedures described herein. The inventive system may also be implemented as a computer-readable storage medium, configured with (i.e., storing) a computer program, where the storage medium so configured causes a computer system to operate in a specific and predefined manner to perform the functions described herein.

A number of exemplary aspects and exemplary embodiments of the invention have been described above. Nevertheless, it will be understood that various modifications may be made without departing from the spirit and scope of the invention. Numerous modifications and variations of the present invention are possible in light of the above teachings. It is to be understood that within the scope of the appended claims, the invention may be practiced otherwise than as specifically described herein.

As will be appreciated by one of skill in the art, the present invention, as described hereinabove and the accompanying figures, may be embodied as a method (e.g., a computer-implemented process, a business process, or any other process), apparatus (including a device, machine, system, computer program product, and/or any other apparatus), or a combination of the foregoing.

Accordingly, embodiments of the present invention may take the form of an entirely hardware embodiment, an entirely software embodiment (including firmware, resident software, micro-code, etc.), or an embodiment combining software and hardware aspects that may generally be referred to herein as a "system". Furthermore, embodiments of the present invention may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Embodiments of the present invention are described hereinabove with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment of the invention.

It should be noted that terms such as "server" and "processor" may be used herein to describe devices that may be used in certain embodiments of the present invention and should not be construed to limit the present invention to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present invention should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects of the invention and should not be construed to limit the present invention to any particular logic flow or logic implementation. The described logic may be partitioned into different logic blocks (e.g., programs, modules, functions, or subroutines) without changing the overall results or otherwise departing from the true scope of the invention.

Often times, logic elements may be added, modified, omitted, performed in a different order, or implemented using different logic constructs (e.g., logic gates, looping primitives, conditional logic, and other logic constructs) without changing the overall results or otherwise departing from the true scope of the invention.

The present invention may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof. Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs. The present invention may also be embodied in a hardware-based or a software-based neural network trained on input and output data sets generated by the invention.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code may be converted (e.g., via a translator, assembler, or compiler) into a computer executable form.

Computer-executable program code for carrying out operations of embodiments of the present invention may be written in an object oriented, scripted or unscripted programming language such as Java, Perl, Smalltalk, C++, or the like. However, the computer program code for carrying out operations of embodiments of the present invention may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" refers generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some embodiments of the invention may be implemented as a combination of both software (e.g., a computer program product) and hardware. Still other embodiments of the invention are implemented as entirely hardware, or entirely software.

While certain exemplary embodiments have been described and shown in the accompanying drawings, it is to be understood that such embodiments are merely illustrative of and are not restrictive on the broad invention, and that the embodiments of invention are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured without departing from the scope and spirit of the invention. Therefore, it is to be understood that, within the scope of the appended claims, the invention may be practiced other than as specifically described herein. For example, unless expressly stated otherwise, the steps of processes described herein may be performed in orders different from those described herein and one or more steps may be combined, split, or performed simultaneously.

Those skilled in the art will also appreciate, in view of this disclosure, that different embodiments of the invention described herein may be combined to form other embodiments of the invention.

**Claims**

1. Method for estimating a signal-to-interference-plus-noise ratio (SINR) at a receiver of a wireless communication system using OFDM signals, the method including:

   - determining an estimate $\hat{s}_{serving}$ of the signal power of a serving cell of the communication system based on the channel impulse response estimated for the serving cell,
   - determining an estimate $\hat{s}_{interfering}$ of the signal power of one or more interfering cells of the communication system based on the channel impulse response estimated for the one or more interfering cells, and

   - determining an estimate $\widehat{SINR}$ of the SINR based on the determined estimate of the signal power of the serving cell and the determined estimate of the signal power of the one or more interfering cells.

2. Method according to claim 1, **characterized in that**

   the estimate $\widehat{SINR}$ of the SINR is determined further based on an estimate $\widehat{\sigma_n^2}$ of the noise variance in the time domain.

3. Method according to claim 2, **characterized in that**

   the estimate $\widehat{SINR}$ of the SINR is determined based on the equation:

$$\widehat{SINR}(n) = \frac{\hat{s}_{serving}(n)}{\hat{s}_{interfering}(n) + \widehat{\sigma_n^2}}$$

   wherein $n$ denotes a slotnumber or subcarrier number of the signa, and $\sigma_n^2$ is the noise variance.

4. Method according to at least one of the preceding claims, **characterized in that** the estimate of the signal power of the serving cell of the communication system is determined based on the serving cell's channel impulse response in the time domain.

5. Method according to at least one of the preceding claims, **characterized in that** the signal power of the serving cell is estimated as

$$\hat{s}_{serving}(n) = \sum_{k=0}^{L-1} \left\| \hat{h}_{serving}(n,k) \right\|^2$$

where n denotes a slotnumber or subcarrier number of the signal, and where $\hat{h}_{serving}(n,k)$ denotes the respective estimated channel impulse response coefficients in the time domain determined for the serving cell.

6. Method according to at least one of the preceding claims, **characterized in that** the estimate of the signal power of the one or more interfering cells of the communication system is determined based on the interfering cells' channel impulse response in the time domain.

7. Method according to at least one of the preceding claims, **characterized in that** the signal power of the one or more interfering cells is respectively estimated as

$$\hat{s}_{interfering}(n) = \sum_{k=0}^{L-1} \left\| \hat{h}_{interfering}(n,k) \right\|^2$$

where *n* denotes a slotnumber or subcarrier number of the signal, and where $\hat{h}_{interfering}(n,k)$ denotes the respective estimated channel impulse response coefficients in the time domain determined for the respective interfering cell.

8. Method according to at least one of the preceding claims, **characterized in that** the channel impulse response for the serving cell and/or for the one or more interfering cells is respectively estimated based on respective cell-specific pilot sequences in reference signals of the serving cell and/or the one or more interfering cells.

9. Method for equalization of received symbols at a receiver of a wireless communication system using OFDM signals, the method including:

    - determining an equalizer filter, and
    - applying the equalizer filter onto the received signal for equalization of the signal,

    wherein the equalizer filter is determined in the time domain based on an estimated channel impulse response, an estimated noise covariance and an estimated received symbol covariance.

10. Method according to claim 9, **characterized in that** the noise covariance is estimated by assuming that the noise is an identically distributed ideal Gaussian noise.

11. Method according to claim 9 or 10, **characterized in that** the estimated received symbol covariance is estimated based on an estimate of a probability distribution of the OFDM symbols in the time domain.

12. Method according to claim 11, **characterized in that** the probability distribution of the OFDM symbols in the time domain is estimated based on assuming a uniform distribution of the OFDM symbols in the frequency domain and performing an inverse fourier transform on the uniformly distributed frequency domain OFDM symbols.

13. Method according to claim 11 or 12, **characterized in that** the probability distribution of the OFDM symbols in the time domain is estimated based on assuming a Gaussian distribution of the OFDM symbols in the time domain.

14. Method according to claims 12 and 13, **characterized in that** a variance and/or mean of the Gaussian distribution of the OFDM symbols in the time domain is estimated based on the inverse fourier transform of the uniformly distributed frequency domain OFDM symbols.

15. Method according to at least one of the claims 9 to 14, characterized that
the equalizer filter is an LMMSE equalizer filter, in particular a Wiener filter.

16. Method according to at least one of the claims 9 to 15, characterized that
the equalizer filter is determined based on the equation:

$$w = R_{xx}H(HR_{xx}H^H + R_{nn})^{-1}$$

where $H$ denotes a channel matrix based on a channel impulse response estimate, where $R_{nn}$ denotes a noise covariance matrix estimated based on noise or noise assumptions, and $R_{xx}$ denotes a symbol covariance matrix estimated based on an estimated symbol distribution in the time domain.

17. Receiver adapted to receive signals in a wireless communication system using OFDM signals, the receiver including a processor or processing unit configured to execute the method of any of claims 1 to 16.

18. Computer program product including computer-readable instructions that, when executed on a processor or processing unit of a computer or an OFDM receiver, cause the computer or OFDM receiver to execute the method of any of claims 1 to 16.

# Fig. 1

FFT of reference signal and received signal product

# Fig. 2

Normalized MSE of Novel Channel estimation scheme

**Fig. 3**

S301

S302

Obtain received
signal y(n)

Obtain reference
signal $x_{ref}(n)$

⊗

Determine product parameter z(n,m) — S303

Σ

Determine sum parameter z(n) — S304

Calculate metric f(z(n)) — S305

Compare metric f(z(n)) with threshold — S306

Yes   $f(z(n)) < \sigma^2_n$   No

Set channel impulse
response h(n) = 0

Store channel impulse
response h(n) = z(n)

S307

S308

## Fig. 4

S401

Obtain received
signal y(n)

S402

Obtain reference
signal $x_{ref}(n)$

⊗

Determine product parameter z(n,m) — S403

Σ

Determine sum parameter z(n) — S404

Apply FFT — S405

Determine first frequency offset
based on peak location — S406

Obtain corrected signal by
compensating the received signal with
the determined first frequency offset — S407

**Fig. 5**

S502
Obtain reference signal $x_{ref}(n)$

S501
Obtain corrected signal $y(n)$

S503
Compensate reference signal $x_{ref}(n)$ with qi

S504
Determine product parameter $z(n,m)$

$\Sigma$

S505
Determine sum parameter $z(n)$

next qi $\in \{1/Q, ..., (Q-1)/Q\}$

S506
Determine second frequency offset based on maximum

S507
Obtain corrected signal by compensating the corrected signal with the determined second frequency offset

**Fig. 6**

Obtain reference signal $x_{ref}(n)$ — S601

$\| \ \|^2$

$\Sigma$

Determine sum parameter $z(n)$ — S602

Calculate metric $f(z(n))$ — S603

Compare metric $f(z(n))$ with threshold — S604

No $\quad f(z(n)) < \sigma^2_n \quad$ Yes

S606

Store channel impulse response $h(n) = z(n)$

S605

Set channel impulse response $h(n) = 0$

Determine $\|h(n)\|^2$ — S607

$\Sigma$

Determine signal power $s(n)$ — S608

**Fig. 7**

| Determine signal power of the serving cell | S701 |
|---|---|

↓

| Determine signal power of the interfering cell(s) | S702 |
|---|---|

↓

| Determine SINR | S703 |
|---|---|

# Fig. 8

$$\text{Determine } H, R_{nn} \text{ and } R_{xx}$$ — S801

$$\text{Determine matrix } R_{yy} = R_{nn} + H R_{xx} H$$ — S802

$$\text{Determine inverse matrix } (R_{yy})^{-1}$$ — S803

$$\text{Determine matrix } R_{yx} = R_{xx} H$$ — S804

$$\otimes$$

$$\text{Determine filter matrix } w = R_{yx} (R_{yy})^{-1}$$ — S805

$$\text{Obtain received samples } y(n)$$ — S806

$$*$$

$$\text{Apply filter matrix } w \text{ to determine equalized output } x(n)$$ — S807

Europäisches
Patentamt

European
Patent Office

Office européen
des brevets

# EUROPEAN SEARCH REPORT

Application Number

EP 20 17 3513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/121187 A1 (DAS SIBASISH [US] ET AL) 16 May 2013 (2013-05-16) * abstract; paragraphs [0027], [0046], [0050] - [0059] * | 1-8,17, 18 | INV. H04L25/02 H04B17/336 H04L25/03 |
| X | EP 1 908 243 A1 (IPWIRELESS INC [US]) 9 April 2008 (2008-04-09) * paragraph [0137] * | 1-8,17, 18 | |
| A | US 7 450 654 B2 (TEXAS INSTRUMENTS INC [US]) 11 November 2008 (2008-11-11) * column 3 - column 4 * | 1-8,17, 18 | |
| X | US 2004/141548 A1 (SHATTIL STEVE J [US]) 22 July 2004 (2004-07-22) * paragraphs [0109] - [0111]; figure 2 * | 9-18 | |
| A | Vaseghi Saeed S: "Chapter 15. CHANNEL EQUALIZATION AND BLIND DECONVOLUTION" In: "Advanced Digital Signal Processing and Noise Reduction", 1 January 2000 (2000-01-01), John Wiley & Sons Ltd, XP055772190, Retrieved from the Internet: URL:http://dsp-book.narod.ru/308.pdf> * chapter 15.1.5 * | 9-18 | TECHNICAL FIELDS SEARCHED (IPC) H04L H04W H04B |

-/--

The present search report has been drawn up for all claims

| Place of search | Date of completion of the search | Examiner |
|---|---|---|
| Munich | 4 February 2021 | Vucic, Jelena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches
Patentamt
European
Patent Office
Office européen
des brevets

Application Number

EP 20 17 3513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Hani Mehrpouyan: "Channel Equalizer Design Based on Wiener Filter and Least Mean Square Algorithms", Submitted to Royal Military College of Canada 2008. , 1 January 2009 (2009-01-01), XP055772064, Retrieved from the Internet: URL:http://www.mehrpouyan.info/Channel%20E qualizer%20Design%20Based%20on%20Weiner%20 Filter%20and%20Least%20Square%20Algorithms .pdf [retrieved on 2021-02-03] * chapter II-A * ----- | 9-18 | |

TECHNICAL FIELDS
SEARCHED      (IPC)

The present search report has been drawn up for all claims

| Place of search | Date of completion of the search | Examiner |
|---|---|---|
| Munich | 4 February 2021 | Vucic, Jelena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

Europäisches
Patentamt
European
Patent Office
Office européen
des brevets

**Application Number**

EP 20 17 3513

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 20 17 3513

The Search Division considers that the present European patent application does not comply with the requirements of unity of invention and relates to several inventions or groups of inventions, namely:

    1. claims: 1-8(completely); 17, 18(partially)

        estimating a signal-to-interference-plus-noise ratio at a receiver using OFDM signals
        ---

    2. claims: 9-16(completely); 17, 18(partially)

        equalizing received symbols at the receiver using OFDM signals.
        ---

## ANNEX TO THE EUROPEAN SEARCH REPORT
## ON EUROPEAN PATENT APPLICATION NO.

EP 20 17 3513

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2021

| Patent document cited in search report | | Publication date | Patent family member(s) | | Publication date |
|---|---|---|---|---|---|
| US 2013121187 | A1 | 16-05-2013 | US<br>WO | 2013121187 A1<br>2013070847 A1 | 16-05-2013<br>16-05-2013 |
| EP 1908243 | A1 | 09-04-2008 | NONE | | |
| US 7450654 | B2 | 11-11-2008 | US<br>US | 7139320 B1<br>2006291578 A1 | 21-11-2006<br>28-12-2006 |
| US 2004141548 | A1 | 22-07-2004 | US<br>US | 2004141548 A1<br>2008310484 A1 | 22-07-2004<br>18-12-2008 |

EPO FORM P0459

For more details about this annex : see Official Journal of the European Patent Office, No. 12/82